# EUROPEAN PATENT APPLICATION

(11) **EP 4 835 663 A1**
(43) Date of publication of application: **04.11.2026**
(21) Application number: 25817119.8
(22) Date of filing: 12.03.2025
(51) Int. Cl.: G06F 9/48

(54) **PROCESSOR, DATA DISTRIBUTION METHOD, AND ELECTRONIC DEVICE**

(71) Applicant: VeriSilicon Microelectronics (Nanjing) Co., Ltd., Nanjing, Jiangsu 211500 (CN); VeriSilicon Microelectronics (Shanghai) Co., Ltd., Shanghai 201203 (CN); Verisilicon Microelectronics (Hainan) Co., Ltd., Haikou, Hainan 570208 (CN); VeriSilicon Microelectronics (Chengdu) Co., Ltd., Chengdu, Sichuan 610041 (CN); VeriSilicon Technology (Shanghai) Co., Ltd., Shanghai 201306 (CN)
(72) Inventor: YE, Maheng, Nanjing, Jiangsu 211500 (CN); WU, Jianbing, Shanghai 201203 (CN); CHEN, Xiaoying, Shanghai 201203 (CN); WANG, Chao, Shanghai 201203 (CN); LU, Rong, Shanghai 201203 (CN); MENG, Yue, Shanghai 201203 (CN)
(74) Representative: Ponti & Partners, S.L.P
(86) International application number: PCT/CN2025/082209
(87) International publication number: WO 2026/188457

(57) **Abstract**

The present disclosure relates to a processor, a data distribution method, and an electronic device. The processor includes a cluster work distributor and a plurality of clusters, wherein each of the processing clusters includes a second-level work distributor and a plurality of double parallel processor units, each of the double parallel processor units includes a third-level work distributor and two parallel processor units, and each of the parallel processor units includes a fourth-level work distributor and two half parallel processor units; the cluster work distributor is configured to distribute the acquired to-be-distributed data to each of the clusters for processing; the second-level work distributor is configured to send the to-be-distributed data from the cluster work distributor to each of the double parallel processor units for processing; the third-level work distributor is configured to send the to-be-distributed data from the second-level work distributor to each of the parallel processor units for processing; and the fourth-level work distributor is configured to send the to-be-distributed data from the third-level work distributor to each of the half parallel processor units for processing. The present disclosure can improve the processing performance of the processor.

## Description

### TECHNICAL FIELD

The present disclosure relates to the technical field of electronics, and specifically to a processor, a data distribution method, and an electronic device.

### BACKGROUND ART

In processors, such as graphics processing units (GPU), typically the GPU contains multiple processing units. When task distribution is performed, the task batch data is distributed to each processing unit by polling. The processing nodes (including shader cores) in different processing units store the output in an L1 Cache (Level 1 cache) after completing the batch data processing, and the processing nodes in the next stage acquires, from L1 Cache, the data that is processed by the processing nodes of the previous stage and stored in L1 Cache, and proceeds to the next processing step. Each processing unit has its own L1 Cache and is managed uniformly.

In the current GPU, task distribution is performed uniformly by a task distributor that interacts with all processing units. This task distribution method limits the number of processing units capable of interaction. When the number of processing units is very large, the hardware timing is difficult to realize, which results in a limited processing performance of the entire GPU.

### SUMMARY

The objective of embodiments of the present disclosure is to provide a processor, a data distribution method, and an electronic device for improving the processing performance of the processor.

The embodiments of the present disclosure are implemented as follows.

In a first aspect, the embodiments of the present disclosure provide a processor, including: a cluster work distributor and a plurality of clusters, wherein the cluster work distributor is connected to each of the clusters; each of the clusters includes a second-level work distributor and a plurality of double parallel processor units, wherein each of the double parallel processor units includes a third-level work distributor and two parallel processor units; and each of the parallel processor units includes a fourth-level work distributor and two half parallel processor units. The cluster work distributor is configured to distribute acquired to-be-distributed data to each of the clusters for processing; the second-level work distributor is configured to send the to-be-distributed data from the cluster work distributor to each of the double parallel processor units for processing; the third-level work distributor is configured to send the to-be-distributed data from the second-level work distributor to each of the parallel processor units for processing; and the fourth-level work distributor is configured to send the to-be-distributed data from the third-level work distributor to each of the half parallel processor units for processing.

In the above embodiment, the processor provided by the present disclosure involves four-level task distribution, and each level has a corresponding task distributor. Through the multi-level task distribution, the processor can instantiate (or enable) a large number of double parallel processor units, which improves the performance of the processor to process data in parallel.

In conjunction with one possible embodiment in embodiments of the first aspect, the processor further includes a command engine module and an internal cache, and the internal cache is connected to the command engine module and each of the clusters respectively; each of the clusters includes a geometric pipeline and a pixel pipeline, and the geometric pipeline is connected to the pixel pipeline; the command engine module is configured to acquire command data ready to be sent to each of the clusters, write a first command data in the command data to the internal cache, and send second command data in the command data and a data address for acquiring the first command data to the geometric pipeline in each of the clusters by the cluster work distributor, wherein the command data includes the second command data required by the geometric pipeline and the first command data required by the pixel pipeline; and the pixel pipeline is configured to acquire the first command data from the internal cache according to the data address transmitted by the geometric pipeline.

In the above embodiment, the command engine module divides the command data of the processor into two parts. The second command data in the geometric pipeline is directly sent to the geometric pipeline, and only the data address for acquiring the first command data is sent to the geometric pipeline. The first command data required by the pixel pipeline is written to the internal cache. In this way, the geometric pipeline only needs to distribute the command data it requires, the data address for acquiring the first command data is transmitted from the geometric pipeline to the pixel pipeline, and the pixel pipeline will retrieve its required command data from the internal cache. This improves the efficiency of distributing the command data, and reduces the amount of data transmission.

In conjunction with one possible embodiment in embodiments the first aspect, each processing node in the geometric pipeline includes a first input first output queue for storing the command data.

In the above embodiment, by providing the first input first output queue in each processing node of the geometric pipeline, the first input first output queue can be used to buffer the command data required for the drawing task, thereby enabling different functional modules in the processor to execute different drawing tasks and improving efficiency.

In conjunction with one possible embodiment in embodiments the first aspect, each processing node in the pixel pipeline includes the first input first output queue for storing command data.

In the above embodiment, by providing the first input first output queue in each processing node of the pixel pipeline, the first input first output queue can be used to buffer the command data required for the drawing task, thereby enabling different functional modules in the processor to execute different drawing tasks and improving efficiency.

In conjunction with one possible embodiment in embodiments of the first aspect, each of the clusters includes a geometric pipeline, and the geometric pipeline includes a tessellation control shader (TCS) node and a tessellation evaluation shader (TES) node. The cluster work distributor is further configured to acquire execution result data of the TCS node from each of the clusters, and distribute the acquired execution result data of the TCS node to the TES node in each of the clusters.

In the above embodiment, the execution result data of the TCS node will be redistributed across the clusters to balance the processing data of the TES node in each of the clusters, thereby improving the performance of the processor.

In conjunction with one possible embodiment in embodiments the first aspect, the to-be-distributed data includes task data; the processor further includes an internal cache; and the internal cache is connected to each of the clusters respectively. The geometric pipeline further includes a tessellation primitive generator (TPG) batch generator located between the TCS node and the TES node, the TCS node is used to execute distributed task data to obtain execution result data and write the execution result data of the TCS node to the internal cache. The TPG batch generator is configured to generate a first data address for acquiring the execution result data of the TCS node according to the execution result data of the TCS node. The cluster work distributor is specifically configured to acquire a first data address from each of the clusters and distribute the acquired first data address to the TES node in each of the clusters. The TES node is used to acquire the corresponding execution result data of the TCS node from the internal cache according to the distributed first data address.

In the above embodiment, by adopting the above method, when redistributing the execution result data of the TCS node in each cluster across the clusters, only the first data address for acquiring the execution result data of the TCS node is redistributed across the clusters, instead of directly distributing the execution result data of the TCS node, which reduces the amount of data interaction and also reduces the power consumption.

In conjunction with one possible embodiment in embodiments of the first aspect, each of the clusters includes a geometric pipeline and a pixel pipeline, wherein the geometric pipeline includes a primitive assembly (PA) node, and the pixel pipeline includes a rasterization (RA) node. The cluster work distributor is further configured to acquire execution result data of the PA node from each of the clusters, and distribute the acquired execution result data of the PA node to the RA node in each of the clusters.

In the above embodiment, the execution result data of the PA node will be redistributed across the clusters to balance the processing data of the RA node in each of the clusters, thereby improving the performance of the processor.

In conjunction with one possible embodiment in embodiments the first aspect, the to-be-distributed data includes task data, the processor further includes an internal cache, and the internal cache is connected to each of the clusters respectively. The PA node is used to execute distributed task data to obtain execution result data, write the execution result data of the PA node to the internal cache, and generate a second data address for acquiring the execution result data of the PA node. The cluster work distributor is specifically configured to acquire a second data address from each of the clusters and distribute the acquired second data address to the RA node in each of the clusters. The RA node is used to acquire the corresponding execution result data of the PA node from the internal cache according to the distributed second data address.

In the above embodiment, by adopting the above method, when redistributing the execution result data of the PA node in each cluster across the clusters, only the second data address for acquiring the execution result data of the PA node is redistributed across the clusters, instead of directly distributing the execution result data of the PA node, which reduces the amount of data interaction and also reduces the power consumption.

In conjunction with one possible embodiment in embodiments of the first aspect, the processor further includes an input assembler module, and the input assembler module is connected to the cluster work distributor. The input assembler module is configured to assemble acquired vertex data into primitives according to primitive types, assemble a plurality of primitives into vertex shader (VS) batches, and distribute the VS batches through four levels of tasks to each of the half parallel processor units for processing. Each of the VS batches includes a target number of unique vertex data, or includes a target number of complete primitives, wherein the same primitive includes vertex data of same primitive type.

In the above embodiment, by adopting the above method, it can ensure that the VS batch will not cross primitives, that is, the data of one primitive will not be distributed to two VS batches. This avoids the cross-cluster data interaction caused by one primitive being spilled into different clusters for execution.

In a second aspect, the embodiments of the present disclosure provide an electronic device, including the processor as provided in any one possible embodiment of the first aspect.

In a third aspect, the embodiments of the present disclosure further provide a data distribution method for the processor applied to a processor. The processor includes a cluster work distributor and a plurality of clusters, and the cluster work distributor is connected to each of the clusters. Each of the clusters includes a second-level work distributor and a plurality of double parallel processor units, each of the double parallel processor units includes a third-level work distributor and two parallel processor units, and each of the parallel processor units includes a fourth-level work distributor and two half parallel processor units. The method includes: the cluster work distributor distributing acquired to-be-distributed data to each of the clusters for processing; the second-level work distributor sending the to-be-distributed data from the cluster work distributor to each of the double parallel processor units for processing; the third-level work distributor sending the to-be-distributed data from the second-level work distributor to each of the parallel processor units for processing; and the fourth-level work distributor sending the to-be-distributed data from the third-level work distributor to each of the half parallel processor units for processing.

The technical effects that can be realized by the embodiments of the second aspect to the third aspect can be referred to the corresponding technical effects in the embodiments of the first aspect, which are not repeated herein.

### BRIEF DESCRIPTION OF DRAWINGS

In order to more clearly illustrate the technical solutions in the embodiments of the present disclosure, the drawings to be used in the embodiments of the present disclosure will be briefly introduced below. It is to be understood that the following drawings only show certain embodiments of the present disclosure, and therefore should not be regarded as a limitation of the scope. For persons of ordinary skill in the field, other relevant drawings can be obtained according to these drawings without inventive efforts.
FIG. 1 shows a structural schematic diagram of a four-level task distribution of a processor provided by the embodiments of the present disclosure;
FIG. 2 shows a block diagram of a top-level structure of a processor provided by the embodiments of the present disclosure;
FIG. 3 shows a schematic diagram of connections between internal devices in a processor provided by the embodiments of the present disclosure;
FIG. 4 shows a schematic diagram of distributing command data in a processor provided by the embodiments of the present disclosure;
FIG. 5 shows a schematic diagram of different modules executing different tasks in a processor provided by the embodiments of the present disclosure;
FIG. 6 shows a schematic diagram of connections between processing nodes in a geometric pipeline provided by the embodiments of the present disclosure;
FIG. 7 shows a schematic diagram of connections between processing nodes in a pixel pipeline provided by the embodiments of the present disclosure;
FIG. 8 shows a flow schematic diagram of a data distribution method for a processor provided by the embodiments of the present disclosure; and
FIG. 9 shows a structural schematic diagram of an electronic device provided by the embodiments of the present disclosure.

### DETAILED DESCRIPTION OF EMBODIMENTS

The technical solutions in the embodiments of the present disclosure will be described below in conjunction with the drawings in the embodiments of the present disclosure. It is clear that the embodiments described are partial embodiments of the present disclosure, but not all of the embodiments. The following embodiments can be used as examples to more clearly illustrate the technical solutions of the present disclosure, and are not to be used to limit the scope of protection of the present disclosure. It can be understood by those skilled in the art that the following embodiments and features in the embodiments can be combined with each other without conflict.

It should be noted that similar symbols and letters denote similar items in the following drawings, so that once an item is defined in a drawing, no further definition or explanation is required in the subsequent drawings. At the same time, relational terms such as "first", "second", etc., in the description of the present disclosure are only used to distinguish one entity or operation from another entity or operation, and do not necessarily require or imply the existence of any such actual relationship or order between these entities or operations. Furthermore, the terms "include", "comprise", or any other variant thereof are intended to cover a non-exclusive inclusion, so that a process, item, or device comprising a set of components includes not only those components, but also other components that are not explicitly listed, or component are inherent to this process, item, or device.

Furthermore, the term 'and/or' in the present disclosure merely describes an associative relationship between the related objects, indicating that three relationships may exist. For example, A and/or B may represent: the presence of A alone, the simultaneous presence of A and B, or the presence of B alone.

In the description of embodiments of the present disclosure, unless otherwise expressly specified and limited, the technical term "connect" can be a direct connection or an indirect connection through an intermediate medium.

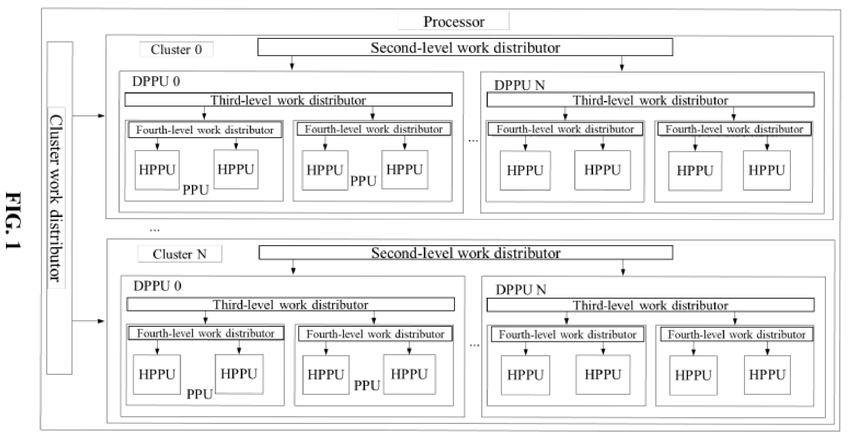

The embodiments of the present disclosure provide a processor based on the four-level task distribution, and the processor provided by the present disclosure is described below in conjunction with FIG. 1. The embodiments of the present disclosure provide a processor, including: cluster work distributor (CWD) and a plurality of clusters, wherein the cluster work distributor is connected to each of the clusters. Each cluster includes a second-level work distributor (DPPU work distributor) and a plurality of double parallel processor units (DPPU); each double parallel processor unit includes a third-level work distributor (PPU work distributor) and two parallel processor units (PPU); and each parallel processor unit includes a fourth-level work distributor (HPPU work distributor) and two half parallel processor units (HPPU). The N in "Cluster N" and "DPPU N" in FIG. 1 is an integer larger than or equal to 1.

The processor provided by the embodiments of the present disclosure includes a plurality of clusters; each cluster includes a plurality of DPPUs; each DPPU includes two PPUs; and each PPU includes two HPPUs. The processor provided by the embodiments of the present disclosure involves four-level task distribution, and each level has a corresponding task distributor. Through the multi-level task distribution, the processor can instantiate (or enable) a large number of double parallel processor units, which improves the performance of the processor to process data in parallel. The principle of task distribution is as follows.

The cluster work distributor is configured to distribute the acquired to-be-distributed data to each of the clusters for processing, wherein the to-be-distributed data includes, but is not limited to, task data, and command data, etc.

The second-level work distributor is configured to receive the to-be-distributed data from the cluster work distributor, and send the to-be-distributed data from the cluster work distributor to each double parallel processor unit for processing.

The third-level work distributor is configured to receive the to-be-distributed data from the second-level work distributor, and send the to-be-distributed data from the second-level work distributor to each parallel processor unit for processing.

The fourth-level work distributor is configured to receive the to-be-distributed data from the third-level work distributor, and send the to-be-distributed data from the third-level work distributor to each half parallel processor unit for processing.

The four-level task distribution of the processor provided by the embodiments of the present disclosure are: cluster (first level), DPPU (second level), PPU (third level), and HPPU (fourth level), wherein the tasks distributed to the cluster by the cluster work distributor belong to the task distribution of the first level; the tasks distributed to the DPPU by the second-level work distributor belong to the task distribution of second level; the tasks distributed to the PPU by the third-level work distributor belong to the task distribution of the third level; and the tasks distributed to the HPPU by the fourth-level work distributor belong to the task distribution of the fourth level.

Each cluster can contain multiple processing nodes, and these processing nodes can contain different types of shader cores, such as vertex shader (VS), pixel shader (PS), tessellation control shader (TCS), tessellation evaluation shader (TES), and geometry shader (GS). Additionally, the processing nodes can further contain the primitive assembly (PA) node, rasterization (RA) node, tessellation primitive generator (TPG) node, TPG batch generator (TPGBG node), and pixel engine (PE) node, etc.

These processing nodes can be distributed at different levels in the cluster. For example, some processing nodes, such as the VS node, PS node, TCS node, and TES node, can be located in the HPPU, wherein the HPPU can contain eight shader cores. The TPG node and TPGBG node can be located in the DPPU, which belongs to the same level as PPU. The PA node, RA node, PE node can belong to the same level as DPPU.

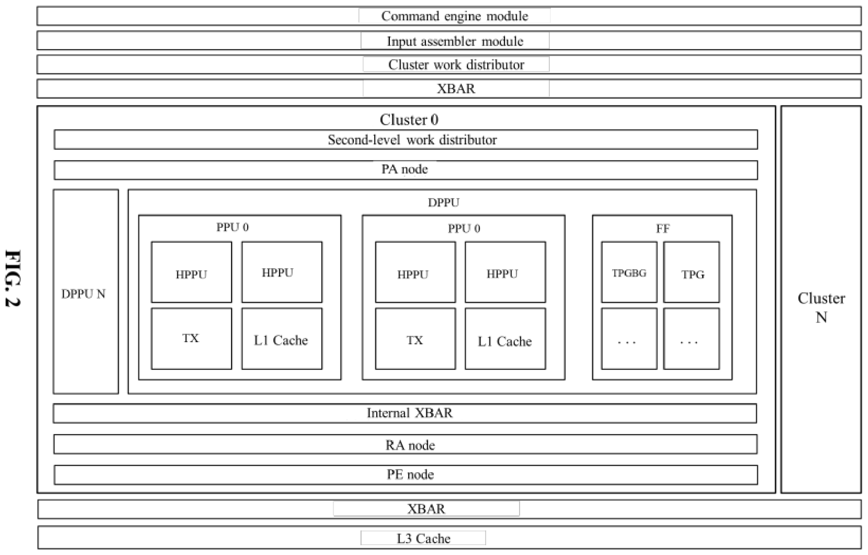

In some embodiments, as shown in FIG. 2, the processor further includes: a command engine (CE) module, an input assembler (IA) module, and an internal cache. The internal cache is connected to the command engine module and each of the clusters. The above internal cache includes a L3 Cache (which is a third-level cache). As can be seen from FIG. 2, each processor contains a CE, IA, CWD, L3 Cache, and multiple Clusters, wherein each Cluster contains a PA, RA, PE, and multiple DPPUs; each DPPU has two PPUs and some fix function (FF) modules, such as TPGBG and TPG; and each PPU contains two HPPUs, a texture (TX) module, and a L1 Cache. The XBAR (cross bar) in FIG. 2 is a network cross switch; CWD can connect to each Cluster by the XBAR; and each Cluster can connect to the L3 Cache by the XBAR.

The input assembler module is connected to the cluster work distributor. The input assembler module is configured to assemble the acquired vertex data into primitives according to primitive types, assemble a plurality of primitives into the VS batch, and distribute the VS batch through four levels of tasks to each of the half parallel processor units for processing.

Each VS batch contains a vertex data index (or vertex data) and the assembled primitive information. Each VS batch includes a target number of unique vertex data (or vertex data indexes), or includes a target number of complete primitives, wherein the same primitive contains the same primitive type of vertex data. The maximum value of the target number includes, but is not limited to, 32. Taking the maximum value of the target number as 32 as an example, one VS batch contains at most 32 vertex data, and these 32 vertex data may form multiple primitives. In the mechanism of assembling a VS batch, all primitives in the VS batch will not be across two VS batches. The steps of assembling the VS batch are as follows:
(1) acquiring index data from a memory such as double data rate (DDR), wherein each vertex data has a corresponding vertex index to index to the corresponding vertex data, and each vertex data contains the primitive type;
(2) assembling the vertex data (which can also be index data) into a primitive according to the primitive type, wherein the vertex data of the same primitive type is assembled into the primitive when assembling; and
(3) assembling the VS batch according to the principle that each VS batch has at most 32 primitives or there are at most 32 unique vertex data, and judging whether the new input vertex data can be put into the current VS batch each time, if yes, continuing the next judgment of new input; and if not, ending the current VS batch and starting assembling the next VS batch.

The present disclosure can ensure that the VS batch will not cross primitives when assembling the VS batch, meaning that, the data of one primitive will not be distributed to two VS batches, which avoids the cross-cluster data interaction caused by one primitive being spilled into different clusters for execution.

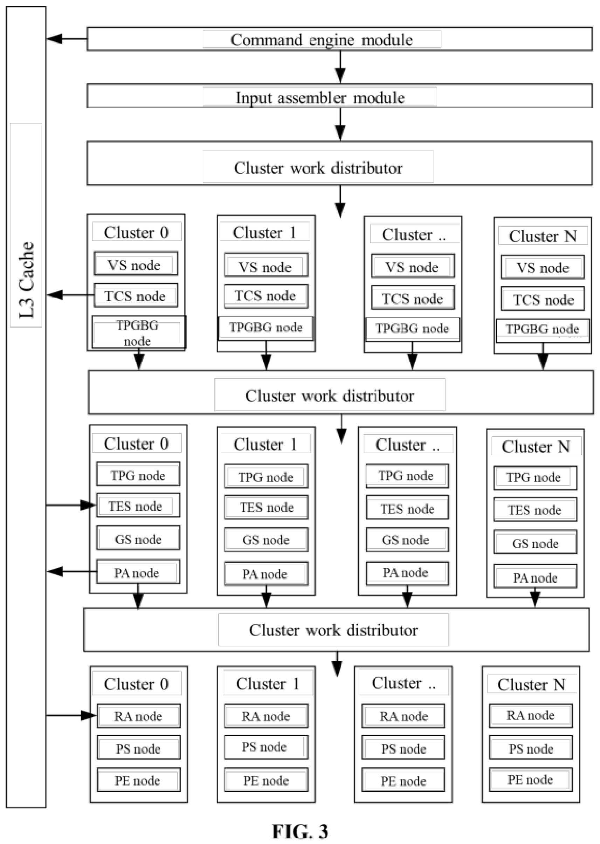

In some possible embodiments, as shown in FIG. 3, each of the clusters includes: a geometric pipeline and a pixel pipeline, and the geometric pipeline is connected to the head end of the pixel pipeline. Both the geometric pipeline and the pixel pipeline contain multiple processing nodes, and these processing nodes can be distributed at different levels. The geometric pipeline can include the VS node, TCS node, TPGBG node, TPG node, TES node, GS node, and PA node, and the pixel pipeline can include the RA node, PS node, and PE node.

The command engine module is configured to acquire command data ready to be sent to each of the clusters, write the first command data in the command data to the internal cache, and send the second command data in the command data and the data address for acquiring the first command data to the geometric pipeline in each of the clusters by the cluster work distributor, wherein the command data includes the second command data required by the geometric pipeline and the first command data required by the pixel pipeline. The pixel pipeline is configured to acquire the first command data from the internal cache according to the data address transmitted by the geometric pipeline. The command engine module will divide the command data of the processor into two parts, where the second command data in the geometric pipeline is directly sent to the geometric pipeline by CWD, and the first command data required by the pixel pipeline is written into the internal cache. In this way, the geometric pipeline only needs to distribute the command data it requires, and the pixel pipeline will retrieve its required command data from the internal cache.

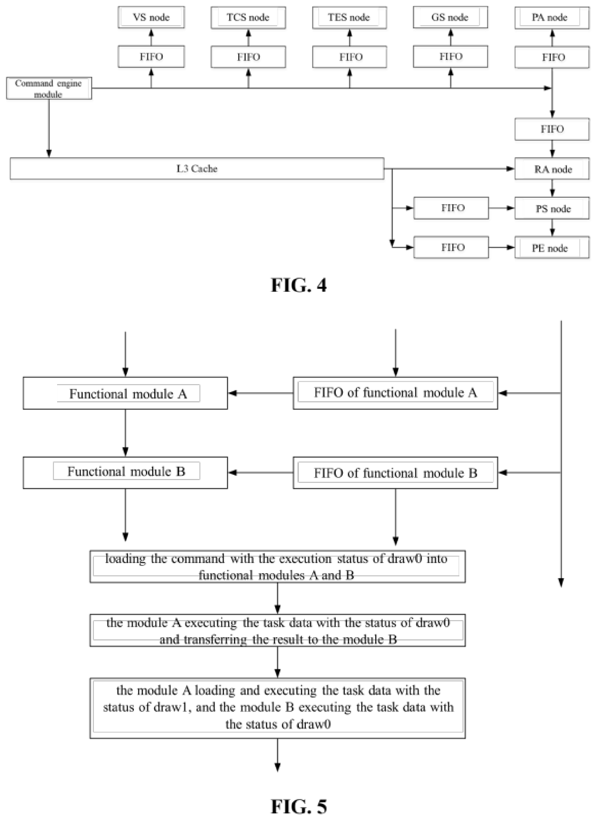

In some possible embodiments, each processing node in the geometric pipeline includes a first input first output (FIFO) queue for storing the command data; and/or each processing node in the pixel pipeline includes the first input first output queue for storing command data. For example, each processing node in the geometric pipeline and each processing node in the pixel pipeline can both contain the first input first output queue for storing the command data, and the schematic diagram thereof is shown in FIG. 4. The first input first output queue can be used to cache the command data required by the drawing task (a specific task). As can be seen from FIG. 4, CE will divide the command data of the processor into two parts, where the second command data in the geometric pipeline is directly sent to the geometric pipeline by CWD, and the first command data required by the pixel pipeline is written into the L3 Cache. In this way, the geometric pipeline only needs to distribute the command data it requires; the data address for acquiring the first command data is transmitted from the geometric pipeline to the pixel pipeline; and finally, the pixel pipeline uses the data address to retrieve its required command data from the L3 Cache.

The processing nodes, such as the VS node, TES node, TCS node, PA node, GS node, RA node, PS node, and PE node in FIG. 4, can use the FIFO queue to cache the command data required by drawing tasks, which can support different functional modules in the processor to perform different drawing tasks. For example, the command data of multiple draws will be loaded into the FIFO queues of the function module A and function module B. Firstly, the module A starts to execute the task data with the status of draw0 and transfers the result to the module B, so that the module B starts to execute the task data of draw0 from the module A and transfers the result to the subsequent modules. At the same time, the module A can execute the task data with the status of draw1. By analogy, different modules in the processor can execute the task data of different draws. The schematic diagram is shown in FIG. 5.

The data distribution of the processor of the present disclosure includes the task data distribution and the command data distribution, wherein the command data can be distributed prior to the task data.

In some embodiments, the geometric pipeline includes the above TCS node and the TES node, wherein the cluster work distributor is further configured to acquire execution result data of the TCS node from each of the clusters, and distribute the acquired execution result data of the TCS node to the TES node in each of the clusters. In this embodiment, the execution result data of the TCS node will be redistributed across clusters to balance the processing data of the TES node in each of the clusters.

The TES node is the node located after the TCS node. Usually, the data processed by the TES node will be larger than the data processed by the TCS node, and at the same time, the execution result data of the TCS node produced by different clusters are different, which leads to the unbalanced task volume of the TES node among different clusters. In order to improve the data processing efficiency, the execution result data of the TCS node in each cluster will be redistributed across the clusters. After the cross-cluster distribution, the processing data of the TES node in each cluster can be balanced, which ensures that the tasks of TES nodes with a large workload can be redistributed more evenly across different clusters, so as to improve the processing performance of the processor.

Therefore, when redistributing the execution result data of the TCS node in each cluster across the clusters, the redistribution can be performed directly across the clusters based on the execution result data of the TCS node. In this embodiment, the TCS node can send its execution result data directly to the cluster work distributor.

In some embodiments, when redistributing the execution result data of the TCS node in each cluster across the clusters, in order to improve the efficiency, only the first data address for acquiring the execution result data of the TCS node is redistributed across the clusters, instead of directly distributing the execution result data of the TCS node.

In this embodiment, the TCS node is used to execute the distributed task data to obtain execution result data and write the execution result data of the TCS node to the internal cache; and the TPG batch generator is configured to generate a first data address for acquiring the execution result data of the TCS node according to the execution result data of the TCS node, and send the first data address to the cluster work distributor. The cluster work distributor is specifically configured to acquire the first data address from each of the clusters and distribute the acquired first data address to the TES nodes in each of the clusters. The TES node is used to acquire the corresponding execution result data of the TCS node from the internal cache according to the distributed first data address.

The TPG batch generator (i.e., the TPGBG node) is a node located before the TPG node, which generates the TPG batch required by the execution of the TPG node. The TPG batch contains the first data address. The TPG node is used to generate the primitive data according to the TPG batch, and its generated primitive data will also be transferred to the TES node for the subsequent processing.

In some embodiments, the geometric pipeline can further include the PA node, and the pixel pipeline can include the RA node. The cluster work distributor is further configured to acquire the execution result data of the PA node from each of the clusters, and distribute the acquired execution result data of the PA node to the RA node in each of the clusters. The PA node can be a node located at the tail end of the geometric pipeline, and the RA node can be a node located at the head end of the pixel pipeline.

After the data is processed by the PA node, some execution result data in the VS node, GS node, or TES node in the geometric pipeline will be discharged. This will result in the unbalanced distribution of the task volume in different pixel pipelines among different clusters, which is similar to the above unbalanced distribution of the tasks of the TES node. Thus, in one embodiment, the cluster work distributor is further configured to acquire the execution result data of the PA node from each of the clusters, and distribute the acquired execution result data of the PA node to the RA node in each of the clusters. The execution result data of the PA node is redistributed across the clusters, so as to balance the processing data of the RA node in each of the clusters.

When redistributing the execution result data of the PA node in each cluster across the clusters, the redistribution can be performed across the clusters based on the execution result data of the PA node. In this embodiment, the PA node can send its execution result data directly to the cluster work distributor for distribution.

In some embodiments, in order to reduce the amount of data transmission and improve efficiency, only the second data address for acquiring the execution result data of the PA node is redistributed across the clusters. In this embodiment, the PA node is configured to execute distributed task data to obtain the execution result data, write the execution result data of the PA node to the internal cache, and generate the second data address for acquiring the execution result data of the PA node; the cluster work distributor is specifically configured to acquire the second data address from each of the clusters and distribute the acquired second data address to the RA node in each of the clusters; and the RA node is configured to acquire the corresponding execution result data of the PA node from the internal cache according to the distributed second data address.

In the present disclosure, the cross-cluster data (such as the execution result data of TCS node and the execution result data of PA node) is written to the internal cache. What is really transferred between different clusters is the data address, which reduces the amount of data interaction and accordingly lowers the power consumption.

The RA node is further configured to execute the distributed task data to obtain the execution result data. In some possible embodiments, the second-level work distributor is further configured to distribute the execution result data from the RA node in the cluster to each double parallel processor unit in the cluster. The RA node in the pixel pipeline is usually located at the same level as the double parallel processor unit, and the next node (PS node) of the RA node is usually located in the half parallel processor unit. By distributing the execution result data of the RA node in each double parallel processor unit in the cluster, the task volume in each double parallel processor unit can be balanced.

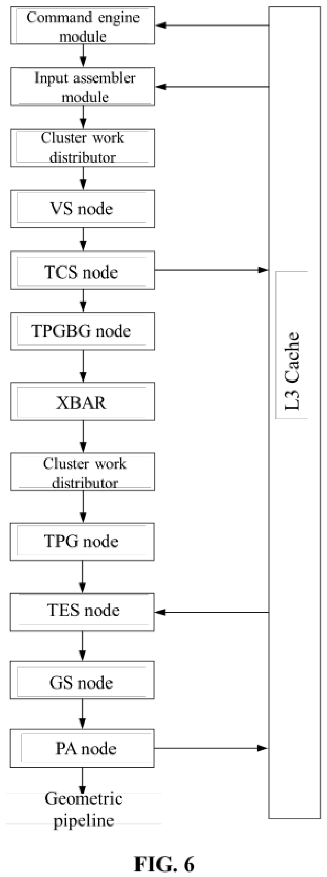

In order to better illustrate the above geometric pipeline, it is described below in conjunction with FIG. 6. The CE will acquire the command data from the memory first, and write the command data required by the pixel pipeline to the L3 Cache; and the data addresses of the command data required by the geometric pipeline and the command data required by the pixel pipeline are sent to the geometric pipeline. The IA will acquire index data from the memory to assemble the VS batch, and send the assembled VS batch to different clusters by the CWD. Through hierarchical task distribution, the VS batch will be finally executed in the VS node in the HPPU. The TCS node is the next shader client (shader type) following the VS node, and the TCS node will be executed in the same cluster as the VS node. The execution result data of the TCS is written to the L3 Cache. The TPGBG node will generate the TPG batch according to the execution result data of the TCS node, wherein the TPG batch contains the first data address for acquiring the execution result data of the TCS node. The TPGBG node sends the TPG batch to the CWD by the XBAR, the TPG batch is redistributed by the CWB to each cluster and then continues the subsequent pipeline. The TPG node will generate a large number of primitives, which are sent to the TES node to compute the attribute data of the primitives generated by the TPG. The GS node will be executed in the same cluster as the TES node. The TES node processes the execution result data from the TPG node and the execution result data from the TCS node in the L3 Cache, and transmits the execution result data to the GS node. The PA node processes the execution result data from the GS node to obtain the primitive batch, stores the primitive batch to the L3 Cache, and sends the data address for acquiring the primitive batch to the RA node in the pixel pipeline. The data address for acquiring the primitive batch is sent to the CWD, and is distributed among different clusters.

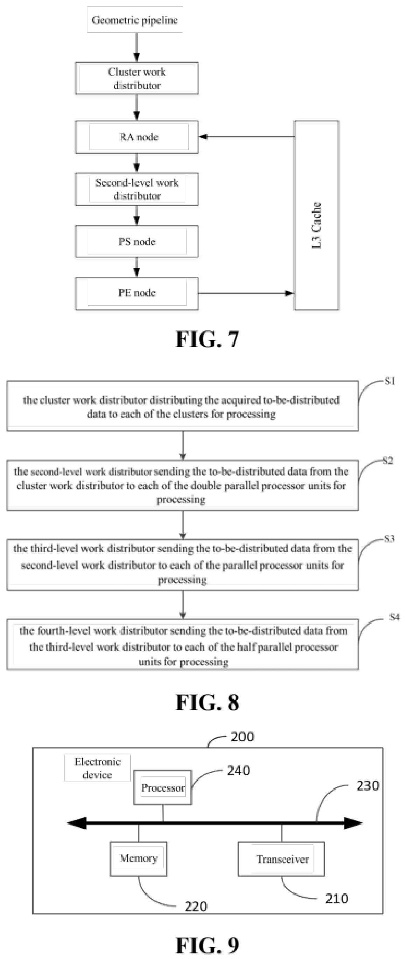

In order to better illustrate the above pixel pipeline, it is described below in conjunction with FIG. 7. Firstly, the RA node will obtain the data address of the command data required by obtaining the pixel pipeline and acquire the data address of the primitive batch from the previous pipeline module of the geometric pipeline, then acquire the command data required by pixel pipeline and primitive batch from the L3 Cache, and finally perform the rasterization operation to generate the PS batch. The PS batch will be distributed among different DPPUs by the second-level work distributor, and finally the PS batch is executed in the PS node of the HPPU. The execution result data will be sent to the PE node, the PE node will perform the post-processing on the execution result data of the PS node, and finally the result data will be written to the memory.

The processor provided by the embodiments of the present disclosure can be a data processing core of GPU, central processing unit (CPU), artificial intelligence (AI), neural network processing unit (NPU), image signal processor (ISP), display processing unit (DPU), video processing unit (VPU), digital signal processor (DSP), etc., or can be a processor chip applied to some scenarios such as large-scale data computing. The foregoing are merely examples and should not be construed as a limitation of the present disclosure.

The embodiments of the present disclosure further provide a data distribution method for the processor, and the method is applied to the above processor. The distribution is described below in conjunction with FIG. 8, including the following steps: S1~S4.

S1: distributing the acquired to-be-distributed data to each of the clusters for processing by the cluster work distributor.

The cluster work distributor can acquire the to-be-distributed data from the IA and distribute the acquired to-be-distributed data to each cluster for processing. Furthermore, the cluster work distributor can acquire the first data address for acquiring the execution result data of the TCS node from the TPGBG node and acquire the second data address for acquiring the execution result data of the PA node from the PA node, and distribute the data addresses to each cluster for processing.

S2: the second-level work distributor sending the to-be-distributed data from the cluster work distributor to each of the double parallel processor units for processing.

S3: the third-level work distributor sending the to-be-distributed data from the second-level work distributor to each of the parallel processor units for processing.

S4: the fourth-level work distributor sending the to-be-distributed data from the third-level work distributor to each of the half parallel processor units for processing.

The principles realized and the technical effects generated by the embodiments of the method are the same as those of the above embodiments of the processor. For a brief description, for what is not mentioned in the part of the method embodiments, reference can be made to the corresponding contents in the foregoing embodiments of the processor.

The embodiments of the present disclosure further provide an electronic device, and the electronic device includes the processor described in any one embodiment above. In one possible embodiment, as shown in FIG. 9, FIG. 9 shows a structure schematic diagram of an electronic device 200 provided by the embodiments of the present disclosure. The electronic device 200 includes: a transceiver 210, a memory 220, a communication bus 230, and a processor 240. The processor 240 is the processor in the above embodiments.

The components of the transceiver 210, the memory 220, and the processor 240 are electrically connected to each other directly or indirectly, so as to realize the transmission or interaction of data. For example, these components can be electrically connected to each other via one or more communication buses 230 or signal lines. The transceiver 210 is configured to send and receive data. The memory 220 is configured to store computer programs, wherein the computer program includes at least one software functional module that can be stored in the memory 220 in the form of software or firmware or solidified in the operating system (OS) of the electronic device 200. The processor 240 is configured to execute software functional modules or computer programs stored in the memory 220.

The memory 220 can be, but is not limited to, a random-access memory (RAM), a read only memory (ROM), a programmable read-only memory (PROM), an erasable programmable read-only memory (EPROM), and an electrically erasable programmable read-only memory (EEPROM), etc.

The above electronic device 200 includes, but is not limited to, a computer, and a server, etc.

The realization principle and the generating technical effect of the processor provided in the embodiments of the electronic device are the same as the foregoing embodiments of the processor. For brief description, portions not mentioned in the embodiments of the electronic device may refer to the corresponding contents in the foregoing embodiments of the processor.

It should be noted that each embodiment in the specification is described in a progressive manner. Each embodiment focuses on the differences with other embodiments, and the same similar parts between the various embodiments can be referred to each other.

Additionally, in the embodiments of the present disclosure, the functional modules can be integrated together to form a single unit, can exist individually, or can be integrated in groups of two or more modules to form a single unit.

The foregoing description is merely exemplary of the embodiments of the present disclosure, and the scope of the present disclosure is not limited thereto. Any variations or substitutions that may be readily conceived by those skilled in the art within the technical scope disclosed herein should be encompassed within the scope of the present disclosure. Therefore, the scope of the present disclosure shall be defined by the claims.

## Claims

1. A processor, **characterized in that** the processor comprises a cluster work distributor and a plurality of clusters, and the cluster work distributor is connected to each of the clusters;
each of the clusters comprises a second-level work distributor and a plurality of double parallel processor units, wherein each of the double parallel processor units comprises a third-level work distributor and two parallel processor units, and each of the parallel processor units comprises a fourth-level work distributor and two half parallel processor units;
the cluster work distributor is configured to distribute acquired to-be-distributed data to each of the clusters for processing;
the second-level work distributor is configured to send the to-be-distributed data from the cluster work distributor to each of the double parallel processor units for processing;
the third-level work distributor is configured to send the to-be-distributed data from the second-level work distributor to each of the parallel processor units for processing; and
the fourth-level work distributor is configured to send the to-be-distributed data from the third-level work distributor to each of the half parallel processor units for processing.

2. The processor according to claim 1, wherein the processor further comprises a command engine module and an internal cache, and the internal cache is connected to the command engine module and each of the clusters respectively;
each of the clusters comprises a geometric pipeline and a pixel pipeline, and the geometric pipeline is connected to the pixel pipeline;
the command engine module is configured to acquire command data ready to be sent to each of the clusters, write first command data in the command data to the internal cache, and send second command data in the command data and a data address for acquiring the first command data to the geometric pipeline in each of the clusters by the cluster work distributor, wherein the command data comprises the second command data required by the geometric pipeline and the first command data required by the pixel pipeline; and
the pixel pipeline is configured to acquire the first command data from the internal cache according to the data address transmitted by the geometric pipeline.

3. The processor according to claim 2, wherein a processing node in the geometric pipeline comprises a first input first output queue for storing the command data.

4. The processor according to claim 2, wherein a processing node in the pixel pipeline comprises a first input first output queue for storing the command data.

5. The processor according to claim 1, wherein each of the clusters comprises a geometric pipeline; the geometric pipeline comprises a tessellation control shader (TCS) node and a tessellation evaluation shader (TES) node; and
the cluster work distributor is further configured to acquire execution result data of the TCS node from each of the clusters, and distribute the acquired execution result data of the TCS node to the TES node in each of the clusters.

6. The processor according to claim 5, wherein the to-be-distributed data comprises task data; the processor further comprises an internal cache; the internal cache is connected to each of the clusters; and the geometric pipeline further comprises a TPG batch generator located between the TCS node and the TES node;
the TCS node is configured to execute distributed task data to obtain execution result data and write the execution result data of the TCS node to the internal cache;
the TPG batch generator is configured to generate a first data address for acquiring the execution result data of the TCS node according to the execution result data of the TCS node;
the cluster work distributor is specifically configured to acquire a first data address from each of the clusters and distribute the acquired first data address to the TES node in each of the clusters; and
the TES node is configured to acquire corresponding execution result data of the TCS node from the internal cache according to the distributed first data address.

7. The processor according to claim 1, wherein each of the clusters comprises a geometric pipeline and a pixel pipeline, the geometric pipeline comprises a primitive assembly (PA) node, and the pixel pipeline comprises a rasterization (RA) node; and
the cluster work distributor is further configured to acquire execution result data of the PA node from each of the clusters, and distribute the acquired execution result data of the PA node to the RA node in each of the clusters.

8. The processor according to claim 7, wherein the to-be-distributed data comprises task data; the processor further comprises an internal cache; and the internal cache is connected to each of the clusters;
the PA node is configured to execute distributed task data to obtain execution result data, write the execution result data of the PA node to the internal cache, and generate a second data address for acquiring the execution result data of the PA node;
the cluster work distributor is specifically configured to acquire a second data address from each of the clusters and distribute the acquired second data address to the RA node in each of the clusters; and
the RA node is configured to acquire corresponding execution result data of the PA node from the internal cache according to the distributed second data address.

9. The processor according to any one of claims 1-8, wherein the processor further comprises an input assembler module, and the input assembler module is connected to the cluster work distributor; and
the input assembler module is configured to assemble acquired vertex data into primitives according to primitive types, assemble a plurality of primitives into vertex shader (VS) batches, and distribute the VS batches through four levels of tasks to each of the half parallel processor units for processing, wherein
each of the VS batches comprises a target number of unique vertex data, or comprises a target number of complete primitives, and the same primitive comprises vertex data of same primitive type.

10. An electronic device, **characterized by** comprising the processor according to any one of claims 1-9.

11. A data distribution method for a processor, applicable to a processor, **characterized in that** the processor comprises a cluster work distributor and a plurality of processing clusters; the cluster work distributor is connected to each of the processing clusters; each of the processing clusters comprises a second-level work distributor and a plurality of double parallel processor units; each of the double parallel processor units comprises a third-level work distributor and two parallel processor units; each of the parallel processor units comprises a fourth-level work distributor and two half parallel processor units; and the method comprises:
the cluster work distributor distributing the acquired to-be-distributed data to each of the clusters for processing;
the second-level work distributor sending the to-be-distributed data from the cluster work distributor to each of the double parallel processor units for processing;
the third-level work distributor sending the to-be-distributed data from the second-level work distributor to each of the parallel processor units for processing; and
the fourth-level work distributor sending the to-be-distributed data from the third-level work distributor to each of the half parallel processor units for processing.
